# EUROPÄISCHE PATENTSCHRIFT

(11) **EP 1 612 018 B1**
(45) Veröffentlichungstag und Bekanntmachung des Hinweises auf die Patenterteilung: **18.09.2013**
(21) Anmeldenummer: 05105957.4
(22) Anmeldetag: 30.06.2005
(51) Int. Cl.: B28D 1/04, B28D 1/12, B23D 61/02, B28D 1/14, B23B 51/00, B23B 51/02, B24D 7/06

(54) **Werkzeug zur Bearbeitung eines mineralischen Untergrundes**
Tool for machining mineral materials
Outil pour travailler des matériaux minéraux

(30) Priorität: 30.06.2004 DE 102004031600
(43) Veröffentlichungstag der Anmeldung: 04.01.2006
(73) Patentinhaber: HILTI Aktiengesellschaft, 9494 Schaan (LI)
(72) Erfinder: Mugg, Peter, 6806, Feldkirch (AT); Cramer, Till, 9473 Gams (CH); Tschegg, Stefanie, 1130, Wien (AT); Mayer, Herwig, 1060, Wien (AT); Zettl, Bernd, 1180, Wien (AT)
(74) Vertreter: Wildi, Roland

(56) Entgegenhaltungen:
- EP-A- 0 358 615
- EP-A- 0 778 102
- EP-A- 0 835 331
- DE-A1- 2 753 475
- DE-A1- 4 444 853
- DE-U- 7 411 770
- GB-A- 961 449
- US-A1- 2003 075 163

## Beschreibung

### Technisches Gebiet

Die Erfindung betrifft ein Werkzeug zur Bearbeitung eines mineralischen Untergrundes, der im Oberbegriff des Patentanspruchs 1 genannten Art, sowie ein Ultraschall-Werkzeuggerät der im Oberbegriff des Patentanspruchs 3 genannten Art.

Ein solches Werkzeug ist der EP 0 358 615 A1 und ein solches Ultraschall-Werkzeuggerät ist der DE 44 44 853 A1 zu entnehmen.

### Stand der Technik

Mineralische Untergründe werden beispielsweise durch Bohren, Schneiden oder Schleifen mittels geeigneter Werkzeuggeräte, wie z. B. Bohr-, Schneid- oder Schleifgeräten, bearbeitet. Dabei kommen handgehaltene wie auch ständergeführte Systeme zur Anwendung.

Insbesondere bei handgehaltenen Systemen ist die beim Bearbeitungsprozess aufzubringende Anpresskraft durch den Anwender limitiert und überschreitet selten 200 N. Um die Bearbeitungseffizienz bei handgehaltenen Systemen zu steigern, ist es bekannt, die Rotationsbewegung des Werkzeuges mit einer Zusatzkinematik zu überlagern. Beispielsweise aus der DE 44 44 853 A1 der Anmelderin ist die Überlagerung der Rotationsbewegung von einer Bohrkrone zum Erstellen einer Kernbohrung mit einer Ultraschallschwingung in Richtung der Bohrlängsachse bekannt. Diese Vorrichtung erzielt gute Ergebnisse, doch wird die verbesserte Abbaueffizienz aus wirtschaftlichen Gesichtspunkten, z. B. durch die reduzierte Gebrauchstauglichkeit der Bohrkrone gegenüber Systemen ohne Zusatzkinematik geschmälert.

Wie in der DE 44 26 238 A1 dargelegt wird, werden Tragkörper für Werkzeuge, wie z. B. Kronenkörper von Bohrkronen, aus einem unlegierten Baustahl mit einem Kohlenstoff-Gehalt von weniger als 0.2% (z. B.: aus "S235JR", Werkstoff-Nr. 1.0037; alte Bezeichnung: "St 37-2") gefertigt. Dieses Material ermöglicht eine wirtschaftliche Fertigung der Bohrkronen und ist gut schweissbar. Solche Bohrkronen sind jedoch für den Einsatz beim Ultraschallbohren ungeeignet, da die erzeugten Ultraschall-Schwingungen durch den unlegierten Baustahl stark gedämpft werden, was zu einem ineffizienten Abbauprozess und zu einer starken Er-wärmung der Bohrkrone führt, so dass die Bohrkronen nur eine geringe Dauerfestigkeit auf-weisen.

Um die oben genannten Nachteile bei Ultraschall-Anwendungen zu vermeiden, ist beispielsweise aus der DE 42 07 031 C2 der Einsatz von Chrom-Nickel-Stahl bekannt. Dieses Mate-rial weist sehr gute Eigenschaften für Ultraschall-Anwendungen auf, ist aber gegenüber einem unlegierten Baustahl 3- bis 5-mal teurer. Ein weiteres Material mit sehr guten Eigenschaften für Ultraschall-Anwendungen stellt Titan-Stahl dar, welcher jedoch ebenfalls ein Velfaches gegenüber einem unlegierten Baustahl kostet. Aus Gründen der Wirtschaftlichkeit kommt die Verwendung dieser Materialen für die Herstellung von Einweg-Werkzeugen nicht in Frage.

Die GB 961,449 zeigt einen Bohrer mit einem Schaft als Tragkörper, der aus einem geeigneten Stahl mit einem Kohlenstoff-Gehalt von 0.5% gefertigt ist.

Die EP 0 358 615 A1 zeigt eine Trennscheibe mit einem scheibenförmigen Tragkörper, der aus einem unlegierten Stahl mit einem Kohlenstoff-Gehalt von 0.2% oder 0.4% gefertigt ist.

Die US 2003/0075163 A1 zeigt eine weitere Trennscheibe mit einem scheibenförmigen Tragkörper, der aus einem Stahl mit einem Kohlenstoff-Gehalt von 0.75% gefertigt ist.

### Darstellung der Erfindung

Aufgabe der Erfindung ist es, ein Werkzeug zur Bearbeitung von mineralischen Untergründen zu schaffen, das mit herkömmlichen Werkzeuggeräten verwendbar ist sowie vorteilhafte Eigenschaften zum Einsatz mit einem Ultraschall-Werkzeuggerät aufweist und wirtschaftlich herstellbar ist.

Die Aufgabe ist durch die Merkmale der unabhängigen Ansprüche 1 und 3 gelöst. Vorteilhafte Weiterbildungen sind in den Unteransprüchen dargelegt.

Gemäss der Erfindung ist das Werkzeug als Bohrkrone zum Kernbohren mit einem hohlzylindrischen Kronenkörper als Tragkörper ausgebildet.

Die Materialkosten für einen unlegierten Vergütungsstahl mit einem Kohlenstoff-Gehalt von 0.2% bis 0.8% sind nur unwesentlich höher als die Materialkosten eines herkömmlichen unlegierten Baustahls, wobei ein aus einem unlegierten Vergütungsstahl mit einem Kohlenstoff-Gehalt von 0.2% bis 0.8% gefertigtes Werkzeug eine geringere materialbedingte Dämpfung der Ultraschallschwingungen und somit eine erhöhte Dauerfestigkeit aufweist. Zudem ist der unlegierte Vergütungsstahl mit einem Kohlenstoff-Gehalt von 0.2% bis 0.8% bedingt schweissbar und weist eine gute Zerspanbarkeit auf. Werkzeuge mit einem Tragkörper aus einem unlegierten Vergütungsstahl mit einem Kohlenstoff-Gehalt von 0.2% bis 0.8% können mit einfachen Werkzeuggeräten, wie auch mit Ultraschall-Werkzeuggeräten verwendet werden.

Überraschenderweise hat sich zudem gezeigt, dass bei diesen Werkzeugen nicht nur die Dämpfung der Ultraschallschwingungen gering und der Dauerfestigkeit gegenüber einem Werkzeug aus einem unlegierten Baustahl erhöht ist, sondern dass auch ein geringerer Leistungsbedarf für die Erzeugung der Ultraschallschwingungen erforderlich ist. Des Weiteren weisen die Werkzeuge aus einem unlegierten Vergütungsstahl mit einem Kohlenstoff-Gehalt von 0.2% bis 0.8% eine verringerte Ausfallwahrscheinlichkeit durch Materialermüdung auf, so dass bis 80% grössere Dehnungsamplituden bei gleicher Bruchwahrscheinlichkeit auf diese Werkzeuge wirken können. Zusammenfassend lässt sich feststellen, dass sich durch die Verwendung von unlegiertem Vergütungsstahl mit einem Kohlenstoff-Gehalt von 0.2% bis 0.8% gegenüber unlegiertem Baustahl zur Herstellung ultraschalltauglicher Werkzeuge bei gleicher Ultraschall-Leistung eine grössere Ultraschall-Amplitude realisieren lässt, wobei durch die erhöhte Dauerfestigkeit des unlegierten Vergütungsstahls mit einem Kohlenstoff-Gehalt von 0.2% bis 0.8% die materialbedingte Ausfallwahrscheinlichkeit auch bei einer grossen Ultraschall-Amplitude gleich bleibt.

Solche Bohrkronen kommen zum Bohren insbesondere von bewehrtem Beton zum Einsatz, wobei der hohlzylindrische Kronenkörper an einem ersten Ende ein Einsteckende zur Kupplung der Bohrkrone mit einem Bohrgerät aufweist und an einem, dem ersten Ende gegenüberliegenden zweiten Ende mit Schneidkörpem, wie beispielsweise mit gesinterten Diamantsegmenten oder definierten Schneiden z. B. aus Hartmetall, als Bearbeitungselement bestückt ist. Der Abbauprozess erfolgt durch eine Rotation der Bohrkrone mittels des Bohrgerätes. Solche Bohrkronen sind so genannte Einweg-Verbrauchsgüter, wobei der Kronenkörper für eine erneute Verwendung als Bohrkrone gegebenenfalls erneut mit Schneidkörpern bestückt wird.

Anstelle des gesamten hohlzylindrischen Kronenkörpers werden oftmals nur Abschnitte desselben, so genannte Wechselmodule, ausgewechselt und jeweils mit Schneidkörpern bestückt. Die Wechselmodule weisen ebenfalls einen hohlzylindrischen Kronenkörperabschnitt als Tragkörper auf und sind an einem ersten Ende mit einer Verbindungsfläche zu dem hohlzylindrischen Kronenkörper versehen sowie an einem zweiten, dem ersten Ende gegenüberliegenden Ende mit Schneidkörper bestückt. Zur Gewährleistung der vorteilhaften Eigenschaften der Bohrkrone auch bei Verwendung derselben mit Ultraschall-Werkzeuggeräten ist der hohlzylindrische Kronenkörperabschnitt ebenfalls aus einem unlegierten Vergütungsstahl mit einem Kohlenstoff-Gehalt von 0.2% bis 0.8% gefertigt.

Vorzugsweise ist der Tragkörper aus einem unlegierten Vergütungsstahl mit einem Kohlen-stoff-Gehalt im Bereich von 0.5% bis 0.7%, idealerweise von 0.6% gefertigt. Ein geeigneter unlegierter Vergütungsstahl ist beispielsweise "C60E" (Werkstoff-Nr. 1.1221; alte Bezeich-nung: "CK60"), der einen Kohlenstoff-Gehalt von 0.57% bis 0.65% aufweist.

In einer Variante ist das Werkzeug als Bohrer mit einem Schaft als Tragkörper ausgebildet. Solche Bohrer kommen zum Bohren von Löchern zum Einsatz, wobei der Schaft an einem ersten Ende ein Einsteckende zur Kupplung des Bohrers mit einem Bohrgerät und an einem zweiten Ende zumindest einen Schneidkörper als Bearbeitungselement aufweist. Der zumindest eine Schneidkörper ist beispielsweise als Hartmetallplatte oder Hartmetall-Bohrkopf ausgebildet, der an dem zweiten Ende des Schaftes festgelegt wird. Der Schaft weist vorzugsweise an seinem äusseren Umfang zumindest eine Wendelnut für die Bohrmehlabfuhr auf, so dass das beim Bohrvorgang anfallende Bohrklein bzw. der anfallende Bohrstaub aus der Bohrung beim Erstellen derselben abgeführt wird. In einer alternativen Ausführungsform des Bohrers ist der Schaft mit einer Längsbohrung versehen, durch die Spülflüssigkeit beim Bohrvorgang dem zumindest einen Schneidkörper zugeführt beziehungsweise das beim Bohrvorgang anfallende Bohrklein bzw. der anfallende Bohrstaub aus der Bohrung abgesaugt werden kann.

In einer weiteren Ausführungsform ist das Werkzeug als Trennscheibe mit einem scheibenförmigen Tragkörper ausgebildet. Solche Trennscheiben kommen beispielsweise zum Trennen oder zum Schlitzen von Bauteilen zum Einsatz, wobei an dem scheibenförmigen Tragkörper eine Durchführöffnung zur Anordnung der Trennscheibe an einer Antriebswelle eines Werkzeuggerätes und am äusseren Umfang Schneidelemente, wie beispielsweise gesinterte Diamantsegmente oder definierte Schneiden z. B. aus Hartmetall, als Bearbeitungselemente vorgesehen sind.

In einer weiteren Ausführungsform ist das Werkzeug als Schleifscheibe mit einem im Wesentlichen scheibenförmigen Tragkörper ausgebildet. Solche Schleifscheiben kommen zur flächigen Bearbeitung eines Bauteils zum Einsatz, wobei an dem scheibenförmigen Tragkörper eine Durchführöffnung zur Anordnung der Schleifscheibe an einer Antriebswelle eines Werkzeuggerätes und an der Unterseite des scheibenförmigen Tragkörpers Schleifelemente, z. B. gesinterte Diamantsegmente, als Bearbeitungselemente vorgesehen sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Ein erfindungsgemässes Werkzeug als Bohrkrone in Längsansicht;
- Fig. 2: eine Variante der in Fig. 1 dargestellten Bohrkrone in Längsansicht;
- Fig.3: ein Werkzeug als Bohrer in Längsansicht;
- Fig. 4: ein Werkzeug als Trennscheibe in der Ansicht;
- Fig. 5: ein Werkzeug als Schleifscheibe in der. Ansicht; und
- Fig. 6: ein Diagramm des Dämpfungsverhaltens verschiedener Materialien bei zwei unter-schiedlichen Ultraschall-Anwendungen.

Grundsätzlich sind in den Figuren gleiche Teile mit den gleichen Bezugszeichen versehen.

### Wege zur Ausführung der Erfindung

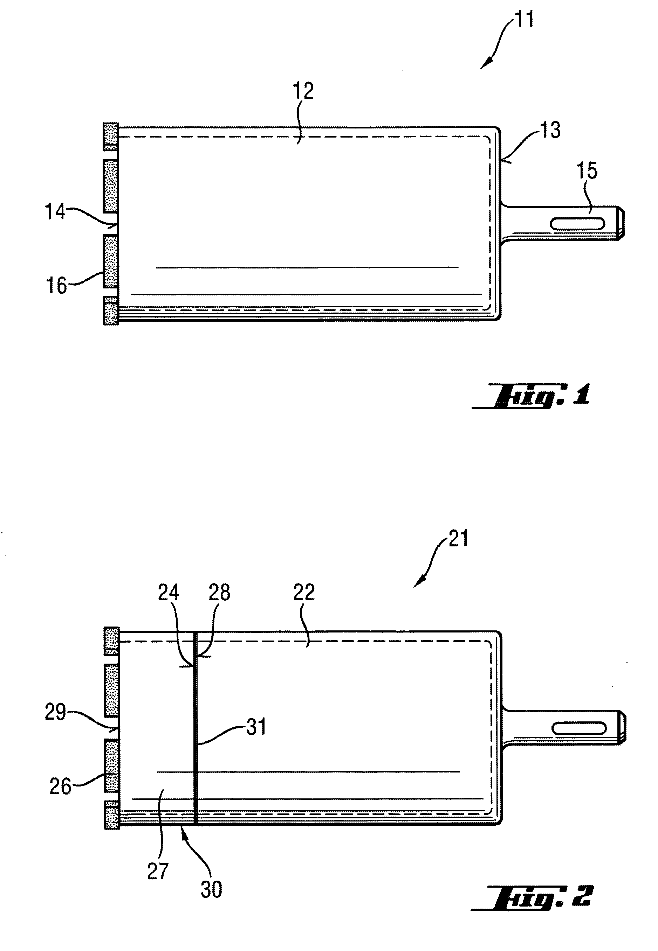

Das als Bohrkrone 11 ausgebildete erfindungsgemässe Werkzeug gemäss Fig. 1 weist einen hohlzylindrischen Kronenkörper 12 als Tragkörper auf, der aus einem unlegierten Vergütungsstahl mit einem Kohlenstoff-Gehalt von 0.2% bis 0.8%, z. B. aus dem Werkstoff C60E, gefertigt ist. Die Bohrkrone 11 weist ein erstes Ende 13 mit einem Einsteckende 15 zur Kupplung der Bohrkrone 11 mit einem Bohrgerät (hier nicht dargestellt) und ein, dem ersten Ende 13 gegenüberliegendes zweites Ende 14 auf, an dem Schneidkörper 16 als Bearbeitungselemente vorgesehen sind.

Bei der in Fig. 2 dargestellten Bohrkrone 21 ist an dem zweiten Ende 24 des hohlzylindrischen Kronenkörpers 22 ein auswechselbares Wechselmodul 30 mit einem hohlzylindrischen Kronenkörperabschnitt 27 als Tragkörper angeordnet, der aus einem unlegierten Vergütungsstahl mit einem Kohlenstoff-Gehalt von 0.2% bis 0.8% gefertigt ist. Der Kronenkörperabschnitt 27 weist ein erstes Ende 28, das als Verbindungsfläche zu dem hohlzylindri-schen Kronenkörper 22 ausgebildet ist, und ein, dem ersten Ende 28 gegenüberliegendes freies Ende 29 auf, welches mit Schneidkörpern 26 als Bearbeitungselemente bestückt ist. Das Wechselmodul 30 ist über eine Schweissnaht 31 oder alternativ über eine Lötnaht mit dem hohlzylindrischen Kronenkörper 22 verbunden und kann von diesem, nach dem Ver-schleiss der Schneidkörper 26, abgetrennt und durch ein mit neuen Schneidkörpern 26 bestücktes Wechselmodul ersetzt werden.

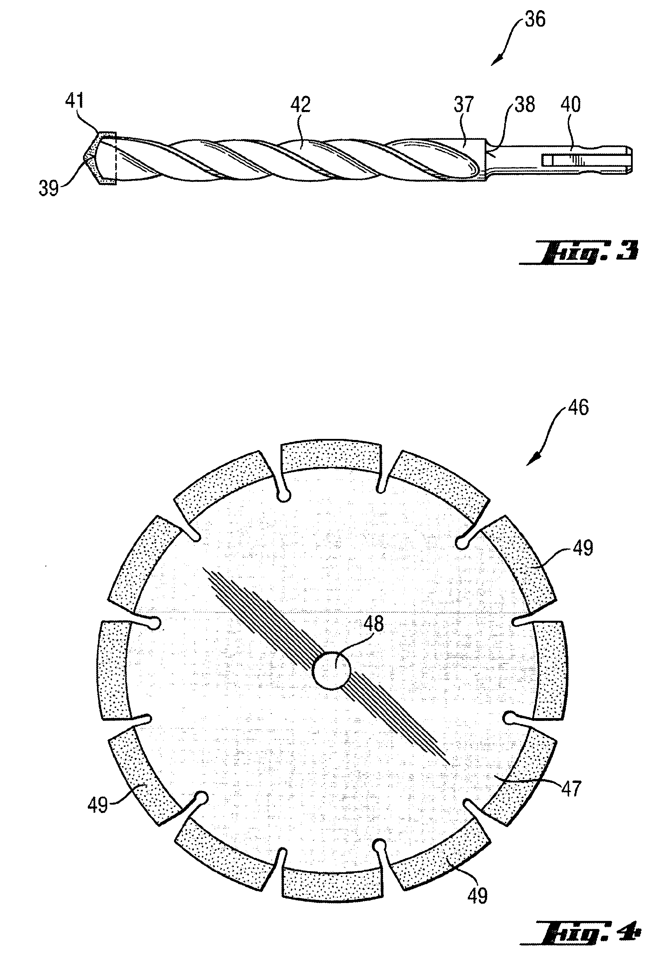

In der Fig. 3 ist das Werkzeug als Bohrer 36 mit einem Schaft 37 als Tragkörper, der aus einem unlegierten Vergütungsstahl mit einem Kohlenstoff-Gehalt von 0.2% bis 0.8%, z. B. aus dem Werkstoff C60E, gefertigt ist, dargestellt. Der Schaft 37 weist an einem ersten Ende 38 ein Einsteckende 40 zur Kupplung des Bohrers 36 mit einem Bohrgerät (hier nicht dargestellt) und an einem zweiten Ende 39 einen, als Hartmetallplatte ausgebildeten Schneidkörper 41 als Bearbeitungselement auf. Der Schaft 37 weist an seinem äusseren Umfang Wendelnuten 42 auf.

Das in Fig. 4 gezeigte Werkzeug ist als Trennscheibe 46 mit einem scheibenförmigen Tragkörper 47 ausgebildet, der aus einem unlegierten Vergütungsstahl mit einem Kohlenstoff-Gehalt von 0.2% bis 0.8% gefertigt ist. An dem scheibenförmigen Tragkörper 47 ist eine Durchführöffnung 48 zur Anordnung der Trennscheibe 46 an einer Antriebswelle eines Werkzeuggerätes (hier nicht dargestellt) vorgesehen und am äusseren Umfang des scheibenförmigen Tragkörpers 47 sind mehrere Schneidelemente 49 als Bearbeitungselemente angeordnet.

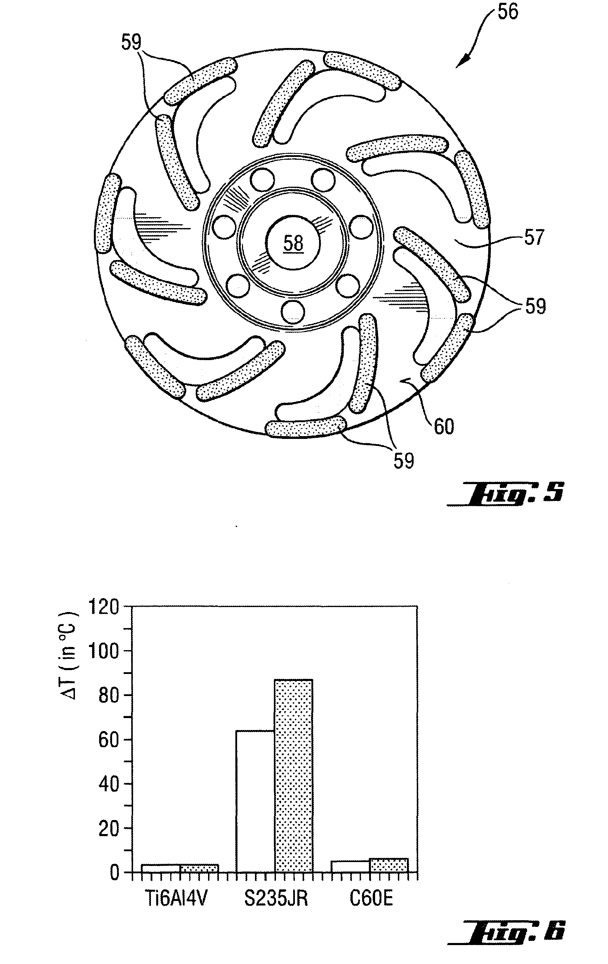

In der Fig. 5 ist das Werkzeug als Schleifscheibe 56 mit einem im Wesentlichen scheibenförmigen Tragkörper 57 ausgebildet, der aus einem unlegierten Vergütungsstahl mit einem Kohlenstoff-Gehalt von 0.2% bis 0.8% gefertigt ist. An dem scheibenförmigen Tragkörper 57 ist eine Durchführöffnung 58 zur Anordnung der Schleifscheibe 56 an einer Antriebswelle eines Werkzeuggerätes (hier nicht dargestellt) vorgesehen und an der Unterseite 60 des scheibenförmigen Tragkörpers 57 sind mehrere Schleifelemente 59 angeordnet.

Die vorteilhaften Eigenschaften von Werkzeugen mit Tragkörpern aus einem unlegierten Vergütungsstahl mit einem Kohlenstoff-Gehalt von 0.2% bis 0.8%, insbesondere aus C60E, und die überraschenden Eigenschaften in der Verwendung mit Ultraschall-Werkzeuggeräten wurden in verschiedenen intern durchgeführten Versuchen bestätigt. So zeigt das in der Fig. 6 dargestellte Diagramm die Temperaturentwicklung von verschiedenen Materialien bei jeweils zwei verschiedenen Amplituden. Die linke Säule jedes Säulenpaares zeigt die Temperaturentwicklung bei einer Belastung der Materialproben während 2 min bei einer Dehnung (ε) von 0.3*10⁻³ und einer Amplitude von 12 µm. Die rechte Säule jedes Säulenpaares zeigt die Temperaturentwicklung bei einer Belastung der Materialproben während 1 min bei einer Dehnung (ε) von 0.5*10⁻³ und einer Amplitude von 20 µm. Das erste Säulenpaar zeigt die Ergebnisse einer Materialprobe aus einem Titanstahl (Ti6AI4V) als Referenzmaterial, welche eine sehr geringe Erwärmung unter der jeweiligen Ultraschall-Belastung aufweist. Die geringe Erwärmung des Titanstahls entspricht einer kleinen materialbedingten Dämpfung der Ultraschallwellen. Das zweite Säulenpaar zeigt im Vergleich dazu die Ergebnisse einer Materialprobe aus einem unlegierten Baustahl (S235JR), wie er üblicherweise zur Fertigung der Tragkörper der Werkzeuge verwendet wird, welche eine sehr hohe Erwärmung unter der jeweiligen Ultraschall-Belastung aufweist. Die sehr hohe Erwärmung des unlegierten Baustahls entspricht einer grossen materialbedingten Dämpfung der Ultraschallwellen. Das dritte Säulenpaar zeigt die Ergebnisse einer Materialprobe aus einem unlegierten Vergütungsstahl (C60E), wie er zur Fertigung der Tragkörper der erfindungsgemässen Werkzeuge verwendet wird. Die Erwärmung dieser Materialprobe ist unter der jeweiligen Ultraschall-Belastung nur geringfügig grösser als beim Titanstahl (erstes Säulenpaar), jedoch wesentlich geringer als bei einem unlegierten Baustahl (zweites Säulenpaar).

Weitere Versuche bestätigten diese Ergebnisse und ergaben zudem, dass die Effizienz der zugeführten Leistung zur erzeugbaren Ultraschall-Amplitude bei Werkzeugen mit einem Tragkörper aus einem unlegierten Vergütungsstahls mit einem Kohlenstoff-Gehalt von 0.2% bis 0.8%, insbesondere aus C60E, massgeblich gegenüber einem Werkzeug mit einem Tragkörper aus unlegiertem Baustahl (S235JR) gesteigert wird. Zudem können bei Werkzeugen mit einem Tragkörper aus einem unlegierten Vergütungsstahl mit einem Kohlenstoff-Gehalt von 0.2% bis 0.8%, insbesondere aus C60E, höhere Dehnungsamplituden bei gleich bleibender Bruchwahrscheinlichkeit gegenüber unlegiertem Baustahl auf das erfindungsgemässe Werkzeug aufgebracht werden.

## Patentansprüche

1. Werkzeug zur Bearbeitung eines mineralischen Untergrundes mit einem Ultraschall-Werkzeuggerät mit einem Tragkörper, an dem zumindest ein Bearbeitungselement vorgesehen ist, wobei der Tragkörper aus einem unlegierten Vergütungsstahl mit einem Kohlenstoff-Gehält von 0.2% bis 0.8% gefertigt ist, **dadurch gekennzeichnet, dass** das Werkzeug als Bohrkrone (11; 21) zum Kernbohren mit einem hohlzylindrischen Kronenkörper (12; 22) als Tragkörper ausgebildet ist.

2. Werkzeug nach Anspruch 1, **dadurch gekennzeichnet, dass** der Tragkörper aus einem untegierten Vergütungsstahl mit einem Kohlenstoff-Gehalt von 0.6% (± 0.1%) gefertigt ist.

3. Ultraschall-Werkzeuggerät mit einem Werkzeug zur Bearbeitung eines mineralischen Untergrundes mit einem Tragkörper, an dem zumindest ein Bearbeitungselement vorgesehen ist, **dadurch gekennzeichnet, dass** der Tragkörper aus einem unlegierten Vergütungsstahl mit einem Kohlenstoff-Gehalt von 0.2% bis 0.8% gefertigt ist.

4. Ultraschall-Werkzeuggerät nach Anspruch 3, **dadurch gekennzeichnet, dass** der Tragkörper aus einem unlegierten Vergütungsstahl mit einem Kohlenstoff-Gehalt von 0.6% (± 0.1 %) gefertigt ist.

5. Ultraschall-Werkzeuggerät nach Anspruch 3 oder 4, **dadurch gekennzeichnet, dass** das Werkzeug als Bohrkrone (11; 21) zum Kernbohren mit einem hohlzylindrischen Kronenkörper (12; 22) als Tragkörper ausgebildet ist.

6. Ultraschall-Werkzeuggerät nach Anspruch 3 oder 4, **dadurch gekennzeichnet, dass** das Werkzeug als Bohrer (36) mit einem Schaft (37) als Tragkörper ausgebildet ist.

7. Ultraschall-Werkzeuggerät nach Anspruch 3 oder 4, **dadurch gekennzeichnet, dass** das Werkzeug als Trennscheibe (46) mit einem scheibenförmigen Tragkörper (47) ausgebildet ist.

8. Ultraschall-Werkzeuggerät nach Anspruch 3 oder 4, **dadurch gekennzeichnet, dass** das Werkzeug als Schleifscheibe (56) mit einem im Wesentlichen scheibenförmigen Tragkörper (57) ausgebildet ist.

## Claims

1. Tool for machining a mineral substrate with an ultrasonic device, comprising a carrier body on which at least one machining element is provided, the carrier body being made of an unalloyed quenched and tempered steel having a carbon content of 0.2 % to 0.8 %, **characterised in that** the tool is designed as a drill bit (11; 21) for core drilling with a hollow cylindrical bit body (12; 22) as the carrier body.

2. Tool according to claim 1, **characterised in that** the carrier body is made of an unalloyed quenched and tempered steel having a carbon content of 0.6 % (± 0.1%).

3. Ultrasonic device comprising a tool for machining a mineral substrate, comprising a carrier body on which at least one machining element is provided, **characterised in that** the carrier body is made of an unalloyed quenched and tempered steel having a carbon content of 0.2 % to 0.8 %

4. Ultrasonic device according to claim 3, **characterised in that** the carrier body is made of an unalloyed quenched and tempered steel having a carbon content of 0.6 % (± 0.1 %).

5. Ultrasonic device according to claim 3 or claim 4, **characterised in that** the tool is designed as a drill bit (11; 21) for core drilling with a hollow cylindrical bit body (12; 22) as the carrier body.

6. Ultrasonic device according to claim 3 or claim 4, **characterised in that** the tool is designed as a drill (36) with a shank (37) as the carrier body.

7. Ultrasonic device according to claim 3 or claim 4, **characterised in that** the tool is designed as a cut-off wheel (46) with a disc-shaped carrier body (47).

8. Ultrasonic device according to claim 3 or claim 4, **characterised in that** the tool is designed as an abrasive wheel (56) with a substantially disc-shaped carrier body (57).

## Revendications

1. Outil pour travailler un sous-sol minéral avec un appareil à ultrasons comportant un corps de support sur lequel est prévu au moins un élément de travail, dans lequel le corps de support est fabriqué à partir d'un acier de traitement non allié ayant une teneur en carbone de 0,2 % à 0,8 %,
**caractérisé en ce que** l'outil est configuré sous la forme d'un trépan de carottage (11 ; 21) pour effectuer un carottage avec un corps de trépan cylindrique creux (12 ; 22) qui forme le corps de support.

2. Outil selon la revendication 1, **caractérisé en ce que** le corps de support est fabriqué à partir d'un acier de traitement non allié ayant une teneur en carbone de 0,6 % (± 0,1 %).

3. Appareil à ultrasons comportant un outil pour travailler un sous-sol minéral, comportant un corps de support sur lequel est prévu au moins un élément de travail, **caractérisé en ce que** le corps de support est fabriqué à partir d'un acier de traitement non allié ayant une teneur en carbone de 0,2 % à 0,8 %.

4. Appareil à ultrasons selon la revendication 3, **caractérisé en ce que** le corps de support est fabriqué à partir d'un acier de traitement non allié ayant une teneur en carbone de 0,6 % (± 0,1 %).

5. Appareil à ultrasons selon la revendication 3 ou 4, **caractérisé en ce que** l'outil est configuré sous la forme d'un trépan de carottage (11 ; 21) pour effectuer un carottage avec un corps de trépan cylindrique creux (12 ; 22) qui forme le corps de support.

6. Appareil à ultrasons selon la revendication 3 ou 4, **caractérisé en ce que** l'outil est configuré sous la forme d'une mèche (36) ayant une tige (37) qui forme le corps de support.

7. Appareil à ultrasons selon la revendication 3 ou 4, **caractérisé en ce que** l'outil est configuré sous la forme d'un disque à tronçonner (46) avec un corps de support (47) en forme de disque.

8. Appareil à ultrasons selon la revendication 3 ou 4, **caractérisé en ce que** l'outil est configuré sous la forme d'un disque de meulage (56) avec un corps de support (57) sensiblement en forme de disque.
